# EUROPEAN PATENT SPECIFICATION

(11) **EP 3 796 543 B1**
(45) Date of publication and mention of the grant of the patent: **20.09.2023**
(21) Application number: 19198913.6
(22) Date of filing: 23.09.2019
(51) Int. Cl.: H02P 1/04, H02P 7/06, F04D 27/00, H02P 7/29, B60H 1/00

(54) **METHOD FOR OPERATING A BRUSHED DIRECT CURRENT ELECTRIC MOTOR, DATA PROCESSING APPARATUS, COMPUTER PROGRAM, COMPUTER-READABLE DATA CARRIER AND A DEVICE**
VERFAHREN ZUM BETREIBEN EINES GLEICHSTROMBÜRSTENMOTORS, DATENVERARBEITUNGSGERÄT, COMPUTERPROGRAMM, COMPUTERLESBARER DATENTRÄGER UND EINE VORRICHTUNG
PROCÉDÉ DE FONCTIONNEMENT D'UN MOTEUR ÉLECTRIQUE À COURANT CONTINU À BALAI, APPAREIL DE TRAITEMENT DE DONNÉES, PROGRAMME D'ORDINATEUR, SUPPORT DE DONNÉES LISIBLE PAR ORDINATEUR ET DISPOSITIF

(43) Date of publication of application: 24.03.2021
(73) Proprietor: Mahle International GmbH, 70376 Stuttgart (DE)
(72) Inventor: CARRION, Juan, 46120 Alboraya (ES); DOMINGO, Carlos, 46340 Requena (ES); GASCO, Jorge, 46005 Valencia (ES); GONZALEZ ESPIN, Francisco, 03205 Elche (ES)
(74) Representative: BRP Renaud & Partner mbB Rechtsanwälte Patentanwälte Steuerberater

(56) References cited:
- JP-A- 2017 108 512
- US-A1- 2012 200 244
- US-A1- 2015 333 675

## Description

The present invention relates to a method for operating a brushed direct current electric motor according to the preamble of claim 1. The invention further relates to a device with a brushed direct current electric motor and a control unit which is formed and/or programmed to perform the method.

US 2012/0 200 244 A1 describes a driving apparatus of a sensorless brushless motor including an inverter circuit supplying a power supply voltage, of which duty ratios is variably controlled by a pulse-width modulation (PWM) method. The driving apparatus controls and drives a rotor comfortably at both low-speed range and high-speed range with high accuracy, so that a wider range of control of the rotational speed may be provided. The PWM frequencies are switched in three stages, which are normal, low-speed, and high-speed without effort and raising cost by changing the division ratio in the frequency divider circuit. A PWM generator circuit generates the PWM signal in a rectangular waveform, which may be switched to three different PWM frequencies, that is a normal PWM frequency used for normal-speed rotation of the rotor, a low-speed PWM frequency smaller than the normal PWM frequency, and a high-speed PWM frequency larger than the normal PWM frequency.

US 2007/0 098 373 A1 relates to a direct-current (DC) motor drive unit capable of securely starting up the motor with suppressed startup current and running the motor at the speed in accord with an external speed instruction.

A method of the generic type is known from US 2015/0 333 675 A1 and describes a method for controlling pulse width modulation by a transistor based on the speed of a motor and a transfer function. The system includes a memory storing the transfer function, a transistor modulating an output current, a direct current power source providing the modulated output current to the motor via the transistor, a heat sink configured to absorb heat from the transistor and reflecting a transistor temperature, and a computing device, the computing device being configured to receive an electronic signal representing a desired speed of the motor and being configured to control the modulating input voltage, wherein the transistor produces the modulated output current at a switching frequency from the direct current power source based on the transistor temperature, and with a duty cycle based on the electronic signal as an input to the transfer function. The method of the generic type comprises the steps of
a) receiving an input signal indicating a requested rotational speed of the brushed direct current electric motor or indicating a requested output motor voltage to drive the brushed direct current electric motor,
b) determining an output duty cycle depending on the received input signal,
c) determining an output frequency,
d) generating a pulse width modulated output signal with the determined output duty cycle and the determined output frequency to drive the brushed direct current electric motor,
e) driving the brushed direct current electric motor by the generated pulse width modulated output signal.

From JP 2017 108512 A and from aforementioned US 2012/0 200 244 A1 it is known to compare the determined output duty cycle with at least one predefined output duty cycle threshold. If the determined output duty cycle is less than or equal to the predefined output duty cycle threshold, a first operating frequency is determined as output frequency, and if the determined output duty cycle is higher than the predefined output duty cycle threshold, a second operating frequency is determined as output frequency, wherein the first and second operating frequencies are different.

The problem addressed by the present invention is to provide an improved method for operating a brushed direct current electric motor or at least a different method for operating a brushed direct current electric motor.

This problem is solved according to the invention by the subject-matter of the independent claims. The dependent claims relate to advantageous embodiments.

The invention is based on the general idea to determine an output frequency depending on a determined output duty cycle in order to drive a brushed direct current electric motor.

The inventive method for operating a brushed direct current electric motor comprises the method steps:
a) receiving an input signal indicating a requested rotational speed of the brushed direct current electric motor or indicating a requested output motor voltage to drive the brushed direct current electric motor,
b) determining an output duty cycle depending on the received input signal,
c) determining an output frequency depending on the determined output duty cycle,
d) generating a pulse width modulated output signal with the determined output duty cycle and the determined output frequency to drive the brushed direct current electric motor,
e) driving the brushed direct current electric motor by the generated pulse width modulated output signal.

The term receiving may also mean reading, in particular term receiving or reading may mean a receiving of an electrical signal or reading of an electrical signal.

In an advantageous embodiment, the input signal is an input message, in particular a CAN input message or a LIN input message, with an input command, and in step b) the output duty cycle is determined by the input command of the input message, or the input signal is an analog signal providing an input voltage, and in step b) the output duty cycle is determined by the input voltage of the analog signal.

In an advantageous embodiment, the input signal is a pulse width modulated input signal, and that an input duty cycle of the pulse width modulated input signal is determined, and that in step b) the output duty cycle is determined by applying a predefined transfer function to the determined input duty cycle of the pulse width modulated input signal.

The pulse width modulated input signal may be an electrical pulse width modulated input signal. The pulse width modulated input signal may provide a voltage pulse train signal with non-sinusoidal waveform and a predefined input frequency. The requested rotational speed of the electric motor or the requested output motor voltage to drive the brushed direct current electric motor may be encoded by an input duty cycle of the pulse width modulated input signal.

The duty cycle of a pulse width modulated signal may be expressed as D = T·f·100% where T is the time the signal is active (or is 'on') and f is the frequency of the pulse width modulated signal. The term duty cycle may describe the proportion of 'on' time of the signal with respect to the period of the signal with the period being the reciprocal of the frequency.

An input duty cycle of the pulse width modulated input signal of 100% may indicate that the brushed direct current electric motor has to be operated at maximal rotational speed. An input duty cycle of the pulse width modulated input signal of 0% may indicate that the brushed direct current electric motor has to stand still.

The pulse width modulated input signal may be generated by a central control unit of vehicle. This pulse width modulated input signal may be sent and/or transmitted to a control unit which may be formed and/or programmed to perform the inventive method. This pulse width modulated input signal may be received or may be read by the control unit. The control unit may be formed separately with respect to the central control unit.

The input duty cycle of the pulse width modulated input signal may be determined by the control unit which may be formed and/or programmed to perform the inventive method.

The predefined transfer function may provide a predefined correlation between the determined input duty cycle of the pulse width modulated input signal and an admissible output duty cycle to drive the brushed direct current electric motor. The predefined transfer function may be defined by a predefined analytical function and/or by a predefined numerical function and/or by a predefined look-table. The predefined transfer function may be determined by measurements and/or by simulations. The predefined transfer function may be provided by the control unit which may be formed and/or programmed to perform the inventive method. The predefined transfer function may be stored in the control unit which may be formed and/or programmed to perform the inventive method.

The output duty cycle may depend on the requested motor speed and the predefined transfer function.

An output frequency depending on the determined output duty cycle may be determined by the control unit which may be formed and/or programmed to perform the inventive method. An output frequency may be determined which may provide an optimized operation of the brushed direct current electric motor for a determined output duty cycle.

The output frequency may be changed autonomously depending on the output duty cycle. The output frequency may be changed autonomously depending on the output duty cycle by the control unit which may be formed and/or programmed to perform the inventive method.

A pulse width modulated output signal with the determined output duty cycle and the determined output frequency to drive the brushed direct current electric motor may be generated by the control unit which may be formed and/or programmed to perform the inventive method.

The brushed direct current electric motor may be driven and/or supplied with the generated pulse width modulated output signal.

The pulse width modulated input signal may be a control signal while the generated pulse width modulated output signal may be a power signal. A control signal may not provide enough electrical power to drive the brushed direct current electric motor while a power signal provides enough electrical power to drive the brushed direct current electric motor.

According to the invention, in step c) the determined output duty cycle is compared with at least one predefined output duty cycle threshold, and if the determined output duty cycle is less than or equal to the predefined output duty cycle threshold, a first operating frequency is determined as output frequency, or if the determined output duty cycle is higher than the predefined output duty cycle threshold, a second operating frequency is determined as output frequency, wherein the first operating frequency and the second operating frequency are different.

A hysteresis loop around the output duty cycle threshold may be used to avoid rapid operating frequency changes (toggling between 1st and 2nd operating frequency) when the determined output duty cycle values range near the output duty cycle threshold.

A transition of the output frequency from the first operating frequency to the second operating frequency or a transition of the output frequency from the second operating frequency to the first operating frequency may be determined by at least one predefined hysteresis function.

The predefined hysteresis function may provide a transition of the output frequency from the first operating frequency to the second operating frequency at a first transition output duty cycle threshold which may be higher than a second transition output duty cycle threshold at which a transition of the output frequency from the second operating frequency to the first operating frequency is performed.

The determined output duty cycle may be compared with several predefined output duty cycle thresholds. In such a case, more than two operating frequencies may be available, wherein each of these operating frequencies may be determined as output frequency.

Due to the transition between at least two operating frequencies, the brushed direct current electric motor can be operated by at least two different frequencies depending on the determined output duty cycle. The switching point between the different frequencies and/or predefined output duty cycle threshold may be chosen design- specific and/or application-specific.

According to the invention, the first operating frequency is higher than the second operating frequency. Thus, for low output duty cycles (output duty cycles lower than the predefined output duty cycle threshold) the determined output frequency is higher than the determined output frequency for high output duty cycles (output duty cycles higher than the predefined output duty cycle threshold).

An operation of a brushed direct current electric motor with pulse width modulated output signal with a high output frequency (first operating frequency) provides a reduced inrush current during motor start-up and low speeds, an increased motor useful lifetime at start-up and low speeds and/or a reduced audible noise and vibrations.

An operation of a brushed direct current electric motor with pulse width modulated output signal with a low output frequency (second operating frequency) provides reduced electromagnetic emissions (thus smaller filter can be used to comply with EMC requirements), reduced internal self-heating in the control unit (reduced switching losses) and/or an increased control unit energy efficiency.

Since a high output frequency is used for low output duty cycles, and a low output frequency for high output duty cycles, the brushed direct current electric motor stress at start-up and low speeds is reduced as well as the inrush current is minimized. Additionally, smaller filter (smaller size and lower cost) may be used to meet electromagnetic emission requirements which usually specified at high motor speeds. At high output duty cycles (high motor currents) dissipation on MOSFETs is high, so a reduced output frequency results in lower switching losses increasing the energy efficiency and may allow for a smaller heatsink and an easier thermal control.

In an advantageous embodiment, the first operating frequency is higher than 15 kHz, in particular the first operating frequency is substantially 20 kHz, and the second operating frequency is lower than 5 kHz, in particular the second operating frequency is substantially 1 kHz.

An operation of a brushed direct current electric motor with pulse width modulated output signal with an output frequency of for example 20 kHz may provide a reduced inrush current during motor start-up and low speeds, an increased motor useful lifetime at start-up and low speeds and/or reduced audible noise and vibrations.

An operation of a brushed direct current electric motor with pulse width modulated output signal with a low output frequency of for example 1 kHz may provide reduced electromagnetic emissions (thus smaller filter can be used to comply with EMC requirements), reduced internal self-heating in the control unit (reduced switching losses) and/or an increased control unit energy efficiency.

In an advantageous embodiment, in step c) the determined output duty cycle is compared with at least one predefined output duty cycle threshold region to determine the output frequency. The predefined output duty cycle threshold region may be defined by a lower output duty cycle threshold and a higher output duty cycle threshold, wherein the predefined output duty cycle threshold region may be defined to be between the lower output duty cycle threshold and the higher output duty cycle threshold. The redefined output duty cycle threshold region may include these output duty cycle thresholds.

In an advantageous embodiment, a transition of the output frequency from the first operating frequency to the second operating frequency or a transition of the output frequency from the second operating frequency to the first operating frequency is determined by at least one predefined hysteresis function.

The predefined hysteresis function may provide a transition of the output frequency from the first operating frequency to the second operating frequency at a first transition output duty cycle threshold which may be higher than a second transition output duty cycle threshold at which a transition of the output frequency from the second operating frequency to the first operating frequency is performed.

The predefined hysteresis function may be provided by the control unit which may be formed and/or programmed to perform the inventive method. The predefined hysteresis function may be stored in the control unit which may be formed and/or programmed to perform the inventive method.

In an advantageous embodiment, the at least one predefined output duty cycle threshold is between a lower duty cycle value of 55% and a higher duty cycle value of 75%, in particular between a lower duty cycle value of 60% and a higher duty cycle value of 70%, and/or the at least one predefined output duty cycle threshold region is between a lower duty cycle value of 55% and a higher duty cycle value of 75%, in particular between a lower duty cycle value of 60% and a higher duty cycle value of 70%.

In an advantageous embodiment, in step b) the predefined transfer function provides a non-linear correlation or linear correlation between the determined input duty cycle and the output duty cycle. This non-linear correlation or linear correlation may at least partly provide an increasing output duty cycle value with increasing input duty cycle value.

In an advantageous embodiment, the transfer function comprises a first region in which the output duty cycle is 0%, if the determined input duty cycle is lower than a low duty cycle threshold, and/or that the transfer function comprises a third region in which the output duty cycle is 100%, if the determined input duty cycle is higher than a high duty cycle threshold, and/or that the transfer function comprises a second region between the first region and the second region in which the output duty cycle is correlated to the determined input duty cycle. The second region may comprise the low duty cycle threshold and/or the high duty cycle threshold.

In an advantageous embodiment, the method, in particular the steps a) to e), is performed continuously and/or is performed uninterrupted during an operation of the brushed direct current electric motor. Thus, the operation of the brushed direct current electric motor can be optimized continuously during its operation and/or during its operation time.

In an advantageous embodiment, the method is a computer-implemented method and/or that the method is a method carried out by a computer. A computer may be a control unit and/or a control unit with a processing unit.

The invention further relates to a data processing apparatus comprising means for carrying out the method according to the invention as described above.
The data processing apparatus may be a data processing device and/or a data processing system.

The invention further relates to a computer program comprising instructions which, when the program is executed by a computer, cause the computer to carry out the method according to the invention as described above. A computer may be a control unit and/or a control unit with a processing unit. The computer program may be a computer program product.

The invention further relates to a computer-readable data carrier having stored thereon the computer program according to the invention as described above. The computer-readable data carrier may be a data storage section of a control unit and/or a control unit with a processing unit.

The invention further relates to a device comprising: a control unit which is formed and/or programmed to perform the method a according to the invention as described above, a brushed direct current electric motor which is controlled by the control unit, wherein the control unit is electrically connected to the brushed direct current electric motor, wherein the brushed direct current electric motor is driven by a pulse width modulated output signal generated by the control unit.

The control unit may comprise a processing unit and/or a data storage section and/or an instruction storage section.

The device may comprise a main frame on which the control unit and the brushed direct current electric motor may be arranged. The main frame may form a fan shroud. The device may comprise a wire harness. The control unit and the brushed direct current electric motor may be electrically connected by at least one electrically conductive connecting line. The control unit may comprise a plug section.

The brushed direct current electric motor may have a rotor shaft to which a propeller and/or a bladed rotor may be connected in a rotationally fixed manner. When the brushed direct current electric motor is operated, the propeller may drive an air flow through recesses of the main frame. The device may form a fan. The device may form a fluid conveying unit, in particular a fluid pump. A fluid pump may be a gas pump or a fluid pump. A fluid pump may be a water pump and/or a coolant pump and/or a refrigerant pump and/or a refrigerant compressor. The device may be a traction device.

Additional important features and advantages of the invention will be appreciated from the dependent claims, the drawing and the associated description of the Figure with reference to the drawing.

Preferred embodiments of the invention are illustrated in the drawing and are explained in greater detail in the following description, wherein the same reference numerals refer to the same or similar or functionally identical components.

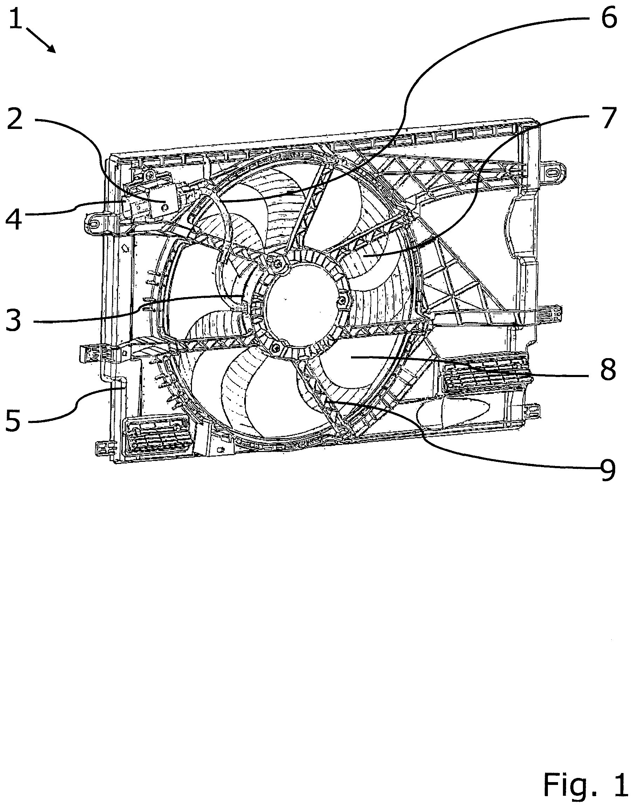

The only Fig. 1 shows a device 1 forming a fan unit comprising a control unit 2 which is formed and/or programmed to perform the method a according to the invention. The device 1 comprises a brushed direct current electric motor 3 which is controlled by the control unit 2, wherein the control unit 2 is electrically connected to the brushed direct current electric motor 3 by an electrically conductive connecting line 6. The control unit 2 comprises a plug section 4 into which a not shown electrically conductive connecting line can be plugged in to provide an electrically and/or communicatively connection to a central control unit of a vehicle and/or to an electric power source unit of the vehicle. The device 1 comprises a main frame 5 on which the control unit 2 and the brushed direct current electric motor 3 are arranged.

The brushed direct current electric motor 3 has a not shown rotor shaft to which a propeller 7 is connected in a rotationally fixed manner. The brushed direct current electric motor 3 is driven by a pulse width modulated output signal generated by the control unit 2, wherein the propeller 7 drives an air flow through recesses 8 of the main frame 5. The recesses 8 are spaced a apart from each other circumferentially by several frame supports 9.

## Claims

1. A method for operating a brushed direct current electric motor (3), comprising
the method steps:
a) receiving an input signal indicating a requested rotational speed of the brushed direct current electric motor (3) or indicating a requested output motor voltage to drive the brushed direct current electric motor (3),
b) determining an output duty cycle depending on the received input signal,
c) determining an output frequency,
d) generating a pulse width modulated output signal with the determined output duty cycle and the determined output frequency to drive the brushed direct current electric motor,
e) driving the brushed direct current electric motor by the generated pulse width modulated output signal,
**characterized in that**
- in step c) the determined output frequency depends on the determined output duty cycle,
- in step c) the determined output duty cycle is compared with at least one predefined output duty cycle threshold,
- if the determined output duty cycle is less than or equal to the predefined output duty cycle threshold, a first operating frequency is determined as output frequency, or if the determined output duty cycle is higher than the predefined output duty cycle threshold, a second operating frequency is determined as output frequency,
- wherein the first operating frequency is higher than the second operating frequency.

2. The method according to claim 1,
**characterized in that**
- the input signal is an input message, in particular a CAN input message or a LIN input message, with an input command, and that in step b) the output duty cycle is determined by the input command of the input message, or
- the input signal is an analog signal providing an input voltage, and that in step b) the output duty cycle is determined by the input voltage of the analog signal.

3. The method according to claim 1,
**characterized in that**
- the input signal is a pulse width modulated input signal, and
- an input duty cycle of the pulse width modulated input signal is determined, and
- in step b) the output duty cycle is determined by applying a predefined transfer function to the determined input duty cycle of the pulse width modulated input signal.

4. The method according to claim 3,
**characterized in**
**that** in step b) the predefined transfer function provides a non-linear correlation or linear correlation between the determined input duty cycle and the output duty cycle.

5. The method according to claim 3 or 4,
**characterized in that**
- the transfer function comprises a first region in which the output duty cycle is 0%, if the determined input duty cycle is lower than a low duty cycle threshold, and/or
- the transfer function comprises a third region in which the output duty cycle is 100%, if the determined input duty cycle is higher than a high duty cycle threshold, and/or
- the transfer function comprises a second region between the first region and the second region in which the output duty cycle is correlated to the determined input duty cycle.

6. The method according to any one of claims 1 to 5,
**characterized in**
**that** the first operating frequency is higher than 15 kHz, in particular the first operating frequency is substantially 20 kHz, and the second operating frequency is lower than 5 kHz, in particular the second operating frequency is substantially 1 kHz.

7. The method according to any one of the preceding claims
**characterized in**
**that** in step c) the determined output duty cycle is compared with at least one predefined output duty cycle threshold region to determine the output frequency,
wherein said predefined output duty cycle threshold region is defined by a lower output duty cycle threshold and a higher output duty cycle threshold.

8. The method according to claim 7,
**characterized in**
**that** the at least one predefined output duty cycle threshold region is between a lower duty cycle value of 55% and a higher duty cycle value of 75%, in particular between a lower duty cycle value of 60% and a higher duty cycle value of 70%.

9. The method according to any one of the claims 1 to 8,
**characterized in**
**that** a transition of the output frequency from the first operating frequency to the second operating frequency or a transition of the output frequency from the second operating frequency to the first operating frequency is determined by at least one predefined hysteresis function.

10. The method according to any one of the claims 1 to 9,
**characterized in**
**that** the at least one predefined output duty cycle threshold is between a lower duty cycle value of 55% and a higher duty cycle value of 75%, in particular between a lower duty cycle value of 60% and a higher duty cycle value of 70%.

11. The method according to any one of the preceding claims,
**characterized in**
**that** the method, in particular the steps a) to e), is performed continuously and/or is performed uninterrupted during an operation of the brushed direct current electric motor (3).

12. The method according to any one of the preceding claims,
**characterized in**
**that** the method is a computer-implemented method and/or that the method is a method carried out by a computer.

13. A data processing apparatus comprising means for carrying out the method of claim 12.

14. A computer program comprising instructions which, when the program is executed by a computer, cause the computer to carry out the method of claim 12.

15. A computer-readable data carrier having stored thereon the computer program of claim 14.

16. A device (1) comprising:
- a control unit (2) comprising the data processing apparatus according to claim 13,
- a brushed direct current electric motor (3) which is controlled by the control unit (2),
- wherein the control unit (2) is electrically connected to the brushed direct current electric motor (3),
- wherein the brushed direct current electric motor (3) is driven by a pulse width modulated output signal generated by the control unit (2).

## Patentansprüche

1. Verfahren zum Betrieb eines bürstenbehafteten Gleichstrom-Elektromotors (3), umfassend
die folgenden Verfahrensschritte:
a) Empfangen eines Eingangssignals, das eine angeforderte Drehzahl des bürstenbehafteten Gleichstrom-Elektromotors (3) angibt oder eine angeforderte Motorausgangsspannung angibt, um den bürstenbehafteten Gleichstrom-Elektromotor (3) anzusteuern,
b) Bestimmen eines Ausgangstastverhältnisses in Abhängigkeit von dem empfangenen Eingangssignal,
c) Bestimmen einer Ausgangsfrequenz,
d) Erzeugen eines pulsbreitenmodulierten Ausgangssignals mit dem bestimmten Ausgangstastverhältnis und der bestimmten Ausgangsfrequenz, um den bürstenbehafteten Gleichstrom-Elektromotor anzusteuern,
e) Ansteuern des bürstenbehafteten Gleichstrom-Elektromotors durch das erzeugte pulsbreitenmodulierte Ausgangssignal,
**dadurch gekennzeichnet, dass**
- in Schritt c) die bestimmte Ausgangsfrequenz von dem bestimmten Ausgangstastverhältnis abhängt,
- in Schritt c) das bestimmte Ausgangstastverhältnis mit mindestens einem vordefinierten Schwellenwert für das Ausgangstastverhältnis verglichen wird,
- wenn das bestimmte Ausgangstastverhältnis kleiner oder gleich dem vordefinierten Schwellenwert für das Ausgangstastverhältnis ist, eine erste Betriebsfrequenz als Ausgangsfrequenz bestimmt wird, oder wenn das bestimmte Ausgangstastverhältnis größer als der vordefinierte Schwellenwert für das Ausgangstastverhältnis ist, eine zweite Betriebsfrequenz als Ausgangsfrequenz bestimmt wird,
- wobei die erste Betriebsfrequenz höher ist als die zweite Betriebsfrequenz.

2. Verfahren nach Anspruch 1,
**dadurch gekennzeichnet, dass**
- das Eingangssignal eine Eingangsnachricht, insbesondere eine CAN-Eingangsnachricht oder eine LIN-Eingangsnachricht, mit einem Eingangsbefehl ist, und dass in Schritt b) das Ausgangstastverhältnis durch den Eingangsbefehl der Eingangsnachricht bestimmt wird, oder
- das Eingangssignal ein analoges Signal ist, das eine Eingangsspannung bereitstellt, und dass in Schritt b) das Ausgangstastverhältnis durch die Eingangsspannung des analogen Signals bestimmt wird.

3. Verfahren nach Anspruch 1,
**dadurch gekennzeichnet, dass**
- das Eingangssignal ein pulsbreitenmoduliertes Eingangssignal ist, und
- ein Eingangstastverhältnis des pulsbreitenmodulierten Eingangssignals bestimmt wird, und
- in Schritt b) das Ausgangstastverhältnis durch Anwendung einer vordefinierten Übertragungsfunktion auf das bestimmte Eingangstastverhältnis des pulsbreitenmodulierten Eingangssignals bestimmt wird.

4. Verfahren nach Anspruch 3,
**dadurch gekennzeichnet,**
**dass** in Schritt b) die vordefinierte Übertragungsfunktion eine nichtlineare Korrelation oder eine lineare Korrelation zwischen dem bestimmten Eingangstastverhältnis und dem Ausgangstastverhältnis bereitstellt.

5. Verfahren nach Anspruch 3 oder 4,
**dadurch gekennzeichnet, dass**
- die Übertragungsfunktion einen ersten Bereich umfasst, in dem das Ausgangstastverhältnis 0 % beträgt, wenn das bestimmte Eingangstastverhältnis unter einem Schwellenwert für ein niedriges Tastverhältnis liegt, und/oder
- die Übertragungsfunktion einen dritten Bereich umfasst, in dem das Ausgangstastverhältnis 100 % beträgt, wenn das bestimmte Eingangstastverhältnis höher ist als ein Schwellenwert für ein hohes Tastverhältnis, und/oder
- die Übertragungsfunktion einen zweiten Bereich zwischen dem ersten Bereich und dem zweiten Bereich umfasst, in dem das Ausgangstastverhältnis mit dem bestimmten Eingangstastverhältnis korreliert ist.

6. Verfahren nach einem der Ansprüche 1 bis 5,
**dadurch gekennzeichnet,**
**dass** die erste Betriebsfrequenz höher als 15 kHz ist, insbesondere wobei die erste Betriebsfrequenz im Wesentlichen 20 kHz beträgt und die zweite Betriebsfrequenz niedriger als 5 kHz ist, insbesondere wobei die zweite Betriebsfrequenz im Wesentlichen 1 kHz beträgt.

7. Verfahren nach einem der vorstehenden Ansprüche,
**dadurch gekennzeichnet,**
**dass** in Schritt c) das bestimmte Ausgangstastverhältnis mit mindestens einem vordefinierten Schwellenwertbereich des Ausgangstastverhältnisses verglichen wird, um die Ausgangsfrequenz zu bestimmen, wobei der vordefinierte Schwellenwertbereich des Ausgangstastverhältnisses durch einen niedrigeren Schwellenwert des Ausgangstastverhältnisses und einen höheren Schwellenwert des Ausgangstastverhältnisses definiert ist.

8. Verfahren nach Anspruch 7,
**dadurch gekennzeichnet,**
**dass** der mindestens eine vordefinierte Schwellenwertbereich des Ausgangstastverhältnisses zwischen einem niedrigeren Wert des Tastverhältnisses von 55 % und einem höheren Wert des Tastverhältnisses von 75 % liegt, insbesondere zwischen einem niedrigeren Wert des Tastverhältnisses von 60 % und einem höheren Wert des Tastverhältnisses von 70 %.

9. Verfahren nach einem der Ansprüche 1 bis 8,
**dadurch gekennzeichnet,**
**dass** ein Übergang der Ausgangsfrequenz von der ersten Betriebsfrequenz zur zweiten Betriebsfrequenz oder ein Übergang der Ausgangsfrequenz von der zweiten Betriebsfrequenz zur ersten Betriebsfrequenz durch mindestens eine vordefinierte Hysteresefunktion bestimmt wird.

10. Verfahren nach einem der Ansprüche 1 bis 9,
**dadurch gekennzeichnet,**
**dass** der mindestens eine vordefinierte Schwellenwert des Ausgangstastverhältnisses zwischen einem niedrigeren Wert des Tastverhältnisses von 55 % und einem höheren Wert des Tastverhältnisses von 75 % liegt, insbesondere zwischen einem niedrigeren Wert des Tastverhältnisses von 60 % und einem höheren Wert des Tastverhältnisses von 70 %.

11. Verfahren nach einem der vorstehenden Ansprüche,
**dadurch gekennzeichnet,**
**dass** das Verfahren, insbesondere die Schritte a) bis e), kontinuierlich und/oder ununterbrochen während eines Betriebs des bürstenbehafteten Gleichstrom-Elektromotors (3) durchgeführt wird.

12. Verfahren nach einem der vorstehenden Ansprüche,
**dadurch gekennzeichnet,**
**dass** das Verfahren ein computerimplementiertes Verfahren ist und/oder dass das Verfahren ein Verfahren ist, das von einem Computer vorgenommen wird.

13. Datenverarbeitungseinrichtung, umfassend Mittel zur Vornahme des Verfahrens nach Anspruch 12.

14. Computerprogramm umfassend Anweisungen, die, wenn das Programm von einem Computer ausgeführt wird, den Computer veranlassen, das Verfahren nach Anspruch 12 vorzunehmen.

15. Computerlesbarer Datenträger, auf dem das Computerprogramm nach Anspruch 14 gespeichert ist.

16. Vorrichtung (1), umfassend:
- eine Steuereinheit (2), umfassend die Datenverarbeitungseinrichtung nach Anspruch 13,
- einen bürstenbehafteten Gleichstrom-Elektromotor (3), der von der Steuereinheit (2) gesteuert wird,
- wobei die Steuereinheit (2) elektrisch mit dem bürstenbehafteten Gleichstrom-Elektromotor (3) verbunden ist,
- wobei der bürstenbehaftete Gleichstrom-Elektromotor (3) durch ein von der Steuereinheit (2) erzeugtes pulsbreitenmoduliertes Ausgangssignal angesteuert wird.

## Revendications

1. Procédé de fonctionnement d'un moteur électrique à courant continu à balais (3), comprenant
les étapes de procédé consistant à :
a) recevoir un signal d'entrée indiquant une vitesse de rotation demandée du moteur électrique à courant continu à balais (3) ou indiquant une tension de sortie moteur demandée pour piloter le moteur électrique à courant continu à balais (3),
b) déterminer un cycle de service de sortie en fonction du signal d'entrée reçu,
c) déterminer une fréquence de sortie,
d) générer un signal de sortie modulé en largeur d'impulsion avec le cycle de service de sortie déterminé et la fréquence de sortie déterminée pour piloter le moteur électrique à courant continu à balais,
e) piloter le moteur électrique à courant continu à balais au moyen du signal de sortie modulé en largeur d'impulsion généré,
**caractérisé en ce que**
- à l'étape c), la fréquence de sortie déterminée dépend du cycle de service de sortie déterminé,
- à l'étape c), le cycle de service de sortie déterminé est comparé à au moins un seuil de cycle de service de sortie prédéfini,
- si le cycle de service de sortie déterminé est inférieur ou égal au seuil de cycle de service de sortie prédéfini, une première fréquence de fonctionnement est déterminée comme fréquence de sortie, ou si le cycle de service de sortie déterminé est supérieur au seuil de cycle de service de sortie prédéfini, une seconde fréquence de fonctionnement est déterminée comme fréquence de sortie,
- dans lequel la première fréquence de fonctionnement est supérieure à la seconde fréquence de fonctionnement.

2. Procédé selon la revendication 1,
**caractérisé en ce que**
- le signal d'entrée est un message d'entrée, en particulier un message d'entrée CAN ou un message d'entrée LIN, avec une commande d'entrée, et **en ce que** à l'étape b), le cycle de service de sortie est déterminé par la commande d'entrée du message d'entrée, ou
- le signal d'entrée est un signal analogique fournissant une tension d'entrée, et **en ce que** à l'étape b), le cycle de service de sortie est déterminé par la tension d'entrée du signal analogique.

3. Procédé selon la revendication 1,
**caractérisé en ce que**
- le signal d'entrée est un signal d'entrée modulé en largeur d'impulsion, et
- un cycle de service d'entrée du signal d'entrée modulé en largeur d'impulsion est déterminé, et
- à l'étape b), le cycle de service de sortie est déterminé en appliquant une fonction de transfert prédéfinie au cycle de service d'entrée déterminé du signal d'entrée modulé en largeur d'impulsion.

4. Procédé selon la revendication 3,
**caractérisé en ce que**
à l'étape b), la fonction de transfert prédéfinie fournit une corrélation non linéaire ou une corrélation linéaire entre le cycle de service d'entrée déterminé et le cycle de service de sortie.

5. Procédé selon la revendication 3 ou 4,
**caractérisé en ce que**
- la fonction de transfert comprend une première région dans laquelle le cycle de service de sortie est de 0 % si le cycle de service d'entrée déterminé est inférieur à un seuil bas de cycle de service, et/ou
- la fonction de transfert comprend une troisième région dans laquelle le cycle de service de sortie est de 100 % si le cycle de service d'entrée déterminé est supérieur à un seuil haut de cycle de service, et/ou
- la fonction de transfert comprend une deuxième région entre la première région et la deuxième région, dans laquelle le cycle de service de sortie est corrélé au cycle de service d'entrée déterminé.

6. Procédé selon l'une quelconque des revendications 1 à 5,
**caractérisé en ce que**
la première fréquence de fonctionnement est supérieure à 15 kHz, en particulier la première fréquence de fonctionnement est sensiblement de 20 kHz, et la seconde fréquence de fonctionnement est inférieure à 5 kHz, en particulier la seconde fréquence de fonctionnement est sensiblement de 1 kHz.

7. Procédé selon l'une quelconque des revendications précédentes,
**caractérisé en ce que**
à l'étape c), le cycle de service de sortie déterminé est comparé à au moins une région de seuils de cycle de service de sortie prédéfinis pour déterminer la fréquence de sortie, dans lequel ladite région de seuils de cycle de service de sortie prédéfinis est définie par un seuil de cycle de service de sortie inférieur et un seuil de cycle de service de sortie supérieur.

8. Procédé selon la revendication 7,
**caractérisé en ce que**
la au moins une région de seuils de cycle de service de sortie prédéfinis se situe entre une valeur de cycle de service inférieur de 55 % et une valeur de cycle de service supérieur de 75 %, en particulier entre une valeur de cycle de service inférieur de 60 % et une valeur de cycle de service supérieur de 70 %.

9. Procédé selon l'une quelconque des revendications 1 à 8,
**caractérisé en ce que**
une transition de la fréquence de sortie depuis la première fréquence de fonctionnement vers la seconde fréquence de fonctionnement ou une transition de la fréquence de sortie depuis la seconde fréquence de fonctionnement vers la première fréquence de fonctionnement est déterminée par au moins une fonction d'hystérésis prédéfinie.

10. Procédé selon l'une quelconque des revendications 1 à 9,
**caractérisé en ce que**
le au moins un seuil de cycle de service de sortie prédéfini se situe entre une valeur de cycle de service inférieur de 55 % et une valeur de cycle de service supérieur de 75 %, en particulier entre une valeur de cycle de service inférieur de 60 % et une valeur de cycle de service supérieur de 70 %.

11. Procédé selon l'une quelconque des revendications précédentes,
**caractérisé en ce que**
le procédé, en particulier les étapes a) à e), est exécuté de façon continue et/ou est exécuté sans interruption pendant un fonctionnement du moteur électrique à courant continu à balais (3).

12. Procédé selon l'une quelconque des revendications précédentes,
**caractérisé en ce que**
le procédé est un procédé mis en oeuvre par ordinateur et/ou **en ce que** le procédé est un procédé exécuté par un ordinateur.

13. Appareil de traitement de données comprenant des moyens pour exécuter le procédé selon la revendication 12.

14. Programme d'ordinateur comprenant des instructions qui, lorsque le programme est exécuté par un ordinateur, amènent l'ordinateur à exécuter le procédé selon la revendication 12.

15. Support de données lisible par ordinateur sur lequel est enregistré le programme d'ordinateur selon la revendication 14.

16. Dispositif (1) comprenant :
- une unité de commande (2) comprenant l'appareil de traitement de données selon la revendication 13,
- un moteur électrique à courant continu à balais (3) qui est commandé par l'unité de commande (2),
- dans lequel l'unité de commande (2) est connectée électriquement au moteur électrique à courant continu à balais (3),
- dans lequel le moteur électrique à courant continu à balais (3) est piloté par un signal de sortie modulé en largeur d'impulsion généré par l'unité de commande (2).
